# EUROPEAN PATENT SPECIFICATION

(11) **EP 1 152 663 B1**
(45) Date of publication and mention of the grant of the patent: **27.10.2004**
(21) Application number: 99962454.7
(22) Date of filing: 23.12.1999
(51) Int. Cl.: A22C 13/00

(54) **PAPER AND RELATED PRODUCTS OF IMPROVED WET EXPANSION PROFILE**
PAPIER UND VERWANDTE PRODUKTE MIT VERBESSERTEN NASS-AUSDEHNUNGSEIGENSCHAFTEN
PAPIER ET PRODUITS CONNEXES A EXPANSION TRANSVERSALE A L'ETAT MOUILLE MIEUX CONTROLEE

(30) Priority: 05.01.1999 EP 99300033
(43) Date of publication of application: 14.11.2001
(73) Proprietor: Ahlstrom Windsor Locks LLC, Windsor Locks, CT 06096 (US)
(72) Inventor: WIGHTMAN, Alan, Northumberland TD15 2YA (GB); STONE, Jeremy, James, Northumberland TD15 1TE (GB)
(74) Representative: Mercer, Christopher Paul
(86) International application number: PCT/GB1999/004418
(87) International publication number: WO 2000/040092

(56) References cited:
- EP-A- 0 531 097
- EP-A- 0 819 725
- EP-A- 0 850 567
- WO-A-95/10190
- DE-A- 2 128 613
- DE-A- 4 417 244
- FR-A- 1 558 603
- GB-A- 1 091 105

## Description

### Field of the invention

The present invention relates to a web material containing cellulosic fibres, to casing paper based on such a web material and to casing material prepared from such casing paper and which is suitable for the packaging of sausage or other meat products or other food products.

### Background to the invention

Paper and related cellulosic web-like products are generally produced by processes that include a drying stage. A wet cellulosic material always shrinks if it is dried without restraint, though the degree of shrinkage varies according to the nature of the material. During drying this natural shrinkage can be countered by the mechanical restraints developed due to the nature of the drying process used. When the drier is a single large glazed heated cylinder (commonly called a "Yankee" drier in the paper industry) the wet web is stuck to the surface of the cylinder and restraint is total, or substantially total, so that shrinkage across the web is minimal and uniform. In the case of a web dried unrestrained, for example in a hot air tunnel, shrinkage can be high but again is uniform.

Commonly, however, the drying stage is carried out by passing the web around a series of drying cylinders that are heated, usually by steam. Owing to the nature of the mechanical restraints on the web, primarily due to frictional forces, the degree of shrinkage that occurs in the web during the drying process varies across the width. The greatest shrinkage occurs at the edges of the web and the shrinkage gradually decreases towards the centre where it is at the minimum. The common multi-cylinder drier produces such an effect because restraint near the edges of the cylinders is low but at the centre it is high.

The degree of shrinkage that a cellulosic web undergoes during drying has a marked effect on several physical properties of the dried web, particularly the elongation and expansion characteristics. A significant effect is that when shrinkage is high the expansion of the web on rewetting, termed "wet expansion", is high and when shrinkage is low wet expansion is low. Thus, the cross direction (CD) wet expansion profile of a multi-cylinder dried cellulosic web is of the same form as the shrinkage profile: high at the edges of the web and low at the centre. This type of profile is often termed a "smile".

A particular cellulosic web product for which wet expansion is a critical property is fibrous sausage casing base paper (casing paper). This material is normally manufactured from strong, relatively long vegetable fibres such as abaca and is impregnated with a viscose solution, which is thereafter regenerated, or a resin binder formulation such that the solids pick-up is, typically, 5%. This casing paper is then formed into tubes and impregnated with up to four times its own weight of cellulose solids from a viscose solution which is regenerated to form a sausage casing used for packaging meat products. Thus, the casing paper serves to reinforce the casing material which comprises the regenerated cellulose. The sausage casing will be filled (stuffed) with the meat product, usually in the form of a coarse paste, under pressure.

When the casing is used as a package for sausage or meat intended to be sliced to form a retail pre-pack it is particularly important that the casing tube expands consistently to the desired diameter so that when the sausage is sliced to a precise thickness, each slice is exactly the same weight and a given number of slices will be exactly the weight desired for the pre-pack. The degree of expansion of the casing at a given "stuffing pressure" is related to the wet expansion of the casing paper; a high expansion paper will give a tube with a relatively high expansion at stuffing pressure.

It is therefore a disadvantage of casing paper produced on a machine with multi-cylinder driers that the paper's wet expansion varies across the width and therefore the resultant casing's expansion at stuffing pressure varies according to the position across the machine of the paper from which it was produced.

A way of countering this disadvantage is to divide the width of the machine into regions of relatively low and relatively high wet expansion and to sell paper from these regions essentially as separate products with different wet expansion specifications. These products might be labelled, for example, as "edge cut" and "centre cut". The use of this technique, while technically satisfactory, does give problems in the planning of casing paper production because the different "cuts" have to be balanced in the required volume; there is also the added complexity for the casing tube producer in the area of inventory control. It would seem that using the previously mentioned "Yankee" drier would overcome the problem but, because the web is dried under virtually total restraint, the expansion is too low and results in what is known as too "stiff" a casing. It has been suggested that a "through drier" would overcome the profile problem (see U.S. Patent No. 3 822 182); such a drier does create a more uniform profile but again, because of the comparatively high drying restraint, the product lacks elongation. There is hence still a need in the art for a casing paper with a reduced CD wet expansion profile but which can be produced whilst still using a multi-cylinder drying regime and thus retaining the advantages of that method.

### Summary of the invention

It has now been found that improvements in the CD wet expansion profile can be achieved by the forming of a cellulosic web, e.g. one made primarily from abaca fibres, into which there is incorporated synthetic fibres, typically polyester, generally in a relatively small quantity. Preferably the cellulosic web is a wetlaid web.

Thus, in one aspect, the present invention provides a web material comprising cellulosic fibres and synthetic fibres; in a second aspect the present invention provides a process, preferably a wetlaying process, for producing such a web material.

In another aspect, the present invention provides the use, in a web material comprising cellulosic fibres, of synthetic fibres for reducing variations in wet expansion in the cross direction of the web material.

In yet another aspect, the present invention provides a casing paper, suitable for the preparation of casing material for the packaging of sausage or other meat product, which casing paper contains a web material comprising cellulosic fibres and synthetic fibres, the web material being bonded with regenerated cellulose or with a resin binder or mixture of resin binders.

In a further aspect, the present invention provides a process for preparing casing paper which comprises forming, preferably by wet-laying, a web containing cellulose fibres and synthetic fibres, and impregnating the web with a resin binder, or mixture of resin binders, or with viscose.

In yet a further aspect, the present invention provides a casing material for the packaging of sausage or other meat product, which comprises material, e.g. in the form of a sheet or a tube, comprising regenerated cellulose in which there is embedded a casing paper according to this invention or a casing paper prepared by a process according to this invention.

In the fourth and sixth aspects of the present invention indicated above, the synthetic fibres are selected from (i) fibres made of an organic polymer selected from polyesters, polyamides, polyolefins and copolymers thereof, (ii) fibres made of a mixture of such organic polymers and (iii) mixtures of fibres (i) and/or (ii). Such synthetic fibres are suitable in the other aspects.

### Brief description of the drawing

The accompanying figure is a graphical representation of the variation of wet expansion along the CD (i) of an exemplary sample of casing paper having a basis weight (grammage) of 21 m²/g and (ii) of, for comparison, a standard casing paper of similar basis weight.

### Description of exemplary embodiments

The cellulosic fibres are generally vegetable fibres, preferably long vegetable fibres, such as long, lightweight nonhydrated fibres of the Musa type. Typically, the average fibre lengths will be from 4 to 15 mm but the presence of shorter or longer fibres is not precluded. Exemplary vegetable fibres are sisal, flax, jute or preferably, abaca. However, the cellulosic web may also comprise woodpulp fibres, typically in an amount of up to 50% by weight of the total fibre content.

The synthetic fibres are generally of a man-made organic polymer or mixture of man-made organic polymers, e.g. polyesters (e.g. polyethylene terephthalate), polyamides (e.g. poly(hexamethylene adipamide) or polycaproamide, or nylon) or polyolefins (e.g. polyethylene or polypropylene). Fibres made of copolymers also come into consideration. A mixture of two or more types of synthetic fibre may, of course, be used.

Preferred synthetic fibres have a high wet modulus. Synthetic fibres having a low melting point, e.g. polypropylene, will generally not be used when the casing material has to be exposed to high temperatures, as when sausage packaged therein is cooked.

The synthetic fibres preferably have an average fibre length of 2 to 20 mm, more preferably 5 to 12 mm. They preferably have a linear density of 0.5 to 6.7 dtex, more preferably 1.7 to 5 dtex.

The proportion of synthetic fibres in the web need not be high and will generally be in the range of from 0.5 to 20% by weight of the total fibre content. To maintain other strength characteristics at high values it is preferred to employ the synthetic fibre at a level of no more than 10% by weight, although the level is preferably at least 1%. A content of synthetic fibre of from 3 to 9% by weight of total fibre content in the web is particularly preferred. The synthetic fibre should in general be uniformly or substantially uniformly distributed in the web.

Methods for producing cellulosic webs suitable for use as casing paper are known in the art and can be readily adapted to the present invention by the incorporation into the fibre furnish of the required proportion of synthetic fibre. Wetlaying methods of web formation are preferred but in principle dry-laid, e.g. air-laid, webs can be used in the practice of this invention.

The web may also be produced as a two-phase material in which the two phases each contain both the cellulosic (especially natural cellulosic) fibres and the synthetic fibres but in different proportions. The proportions for the total web, however, are preferably within the ranges specified above. This embodiment permits the production of casing paper that has a high level of synthetic, e.g. polyester, fibre on one face. Methods of producing two-phase webs are known - see US-A-2 414 833, US-A-4 460 643, GB-A-1542575 and WO-A-97/04956, the teaching in each of which is incorporated herein by reference - and can be readily adopted for the production of two-phase webs according to the present invention.

After formation the web may (if appropriate) be dried, at least partially and preferably substantially fully, and thereafter, impregnated with a viscose solution, dried and the viscose regenerated with dilute acid, normally sulfuric acid, washed and dried. For example, the paper web may be saturated with a dilute viscose solution, for example a solution obtained by diluting a solution containing 7% by weight of cellulose (as cellulose xanthate) and 6% by weight of sodium hydroxide to 1% cellulose content. The resultant viscose-saturated web is then dried and the cellulose in the viscose may then be regenerated by passing the web through an acidic regenerating bath containing, for example, a 1 to 8% aqueous sulfuric acid solution. The web may then be washed free of acid and dried in order to produce a paper web impregnated with acid-regenerated cellulose. This casing paper is then generally formed into rolls ("master rolls").

Alternatively, after formation the web may (if appropriate) be dried, at least partially and preferably substantially fully, and thereafter treated with a resin based binder and dried (once more). The binder may, of course, be a formulation comprising two or more components. For example, US-A-3,484,256 discloses a process for the production of casing paper in which a fibrous web is bonded with a cationic thermosetting resin and a polyacrylamide resin. Another example of a resin-based binder formulation is disclosed in GB-A-1,536,216, according to which casing paper may be made by treating the fibres of a fibrous paper web with a water-soluble cationic, thermosetting, epihalohydrin-containing resin (e.g. a polyamide-epichlorohydrin or polyamine-polyamide-epichlorohydrin resin, for example Kymene 557, ex Hercules), a non-viscose film-forming material (e.g. a cellulose ether such as hydroxyethyl cellulose, methyl cellulose, hydroxypropyl cellulose or sodium carboxymethyl cellulose, polyvinyl alcohol, starch, starch derivatives or natural gums) and a polyalkylene imine, for example polyethylene imine. Yet another possibility is the binder system disclosed in US-A-5,300,319, according to which a fibrous base web is compressed and then treated with a solution of a non-viscose bonding agent, in particular a bonding agent selected from polyvinyl alcohol, chitins (especially de-acetylated chitins), polyacrylamides, alginates, cellulose based materials (such as carboxymethyl cellulose, methyl cellulose, hydroxyethyl cellulose, hydroxypropylmethyl cellulose or hydroxypropyl cellulose), cationic starches, anionic starches, acrylic latexes, modified proteins, vinyl acetate ethylene emulsions and vinyl acrylic emulsions. In EP-A-0,369,337, a sausage casing is described which contains a cellulose fibre mat sized with cellulose aminomethanate.

The drying in all cases can be carried out on multi-cylinder steam heated driers. The product from this process, which would have low variation of wet expansion in the CD, could be used as a fibrous base for a viscose based sausage or meat casing. Thus, for example, casings for the packaging of processed meats, e.g. sausage, may be manufactured from the casing paper by cutting it into strips which are then folded to form tubes. The tubes may be saturated with an alkaline viscose solution, e.g. one containing 7% by weight of cellulose and 6% by weight of sodium hydroxide. The cellulose in the viscose may then be regenerated by means of an acidic regenerating bath containing, for example, dilute sulfuric acid and possibly such salts as sodium sulfate or ammonium sulfate. The tube is then passed through one or more baths in order to wash out the acid and the salts. If desired, the tube may be passed through an aqueous bath which contains a plasticizer, e.g. glycerine, for the regenerated cellulose. The tube may then be dried by passing it through a heated chamber (the tube being in an inflated state) to give a cellulosic tubing which has embedded therein a paper web. This tubing may then be stuffed with a processed meat product under pressure. A process of this type is described in detail in US-A-3,135,613. A process in which the inner wall of a tubular regenerated cellulosic casing is treated with a cationic thermosetting resin is disclosed in US-A-3,378,379.

The teaching in each of the aforesaid US Patents, in the aforesaid European Patent Application and in the aforesaid British Patent is incorporated herein by reference.

A web of this invention could also be envisioned as having application in other end uses requiring relatively uniform wet expansion at different positions across the web. In such application, different cellulosic fibres may be used, the impregnants might be different or might be omitted or different forms of treatment might be employed.

Although the Applicant does not wish to be bound by theory, it is postulated that the synthetic fibres in the web, are much less susceptible to dimension changes on wetting or drying than cellulosics and this greater dimensional stability is transferred to the web as a whole and results in a lessening of the difference in shrinkage and regrowth behaviour of the web edges compared to the web centre. It has also been found that webs prepared according to the present invention can exhibit low variation in CD wet expansion whilst retaining adequate expansion for sausage-stuffing and like operations. This avoidance of "stiffness" is an additional advantage in certain applications.

The present invention is further illustrated in and by the following Examples.

### Examples

In Examples 1 to 3, casing paper has been produced using a conventional wetlaid inclined wire forming process from 100% abaca fibre on the one hand and 94% abaca fibre and 6% 3.3 dtex, 6 mm precision cut polyester fibre on the other hand. The polyester was available under the trade name "Grillon NV2". All fibre webs have been treated with viscose solution so as to achieve a 5% cellulose pick-up and the viscose has then been regenerated with dilute sulphuric acid and washed so as to achieve a final product pH of about 4.9. Three drying stages were employed: after wet-laying, after viscose saturation, and after the regeneration step.

The test methods used in Examples 1 to 4 were:
- Grammage: ISO 536 using a sample size 203 mm (8 inches) square.
- Tensile strength: ISO 1924-2.
- Wet Mullen bursting strength: ISO 3689 except that the soaking time is one minute.
- Wet expansion:
   A constant rate of extension tensile tester (such as would be used for ISO 1924-2) was set up for the following test conditions:
      Test speed = 25.4 mm/min. (1 inch/min.)
      Gauge length = 127 mm (5 inches)
      Pre-load = 0.
   A 25.4 mm (1 inch) sample strip was clamped in the jaws, the tester was started and stopped when the load was between 0.02 and 0.04 N. Three or four bursts of deionised water were sprayed onto the sample from a hand sprayer in order to soak the sample. The tester was restarted and the wet expansion was read off as the elongation when the load was at 0.1 N.
   Wet expansion is expressed as a percentage of the gauge length (sample length before the test was started).
   In the data tables, the wet expansion at the centre and the edge are given. Each of these measures was taken at two preset positions across the width. Also included is the maximum to minimum range (in absolute %) of a cross machine profile measured at 16 equally spaced positions.

### Test data for the examples are tabulated below:

### Example 1 (2 tests of the invention): target grammage 21 g/m²

| Property | 100% abaca Standard | 94% abaca, 6% polyester | |
|---|---|---|---|
| | | Test 1 | Test 2 |
| Grammage (g/m²) | 20.84 | 21.29 | 21.56 |
| MD tensile strength (N/m) | 1841 | 1682 | 1768 |
| CD tensile strength (N/m) | 1235 | 1025 | 1112 |
| Wet burst (Kpa) | 42 | 47 | 43 |
| CD wet expansion, centre (%) | 1.35 | 1.18 | 0.93 |
| CD wet expansion, edge (%) | 2.22 | 1.86 | 1.57 |
| CD wet expansion range, 16 positions (%) | 1.5 | 1.07 | 0.68 |

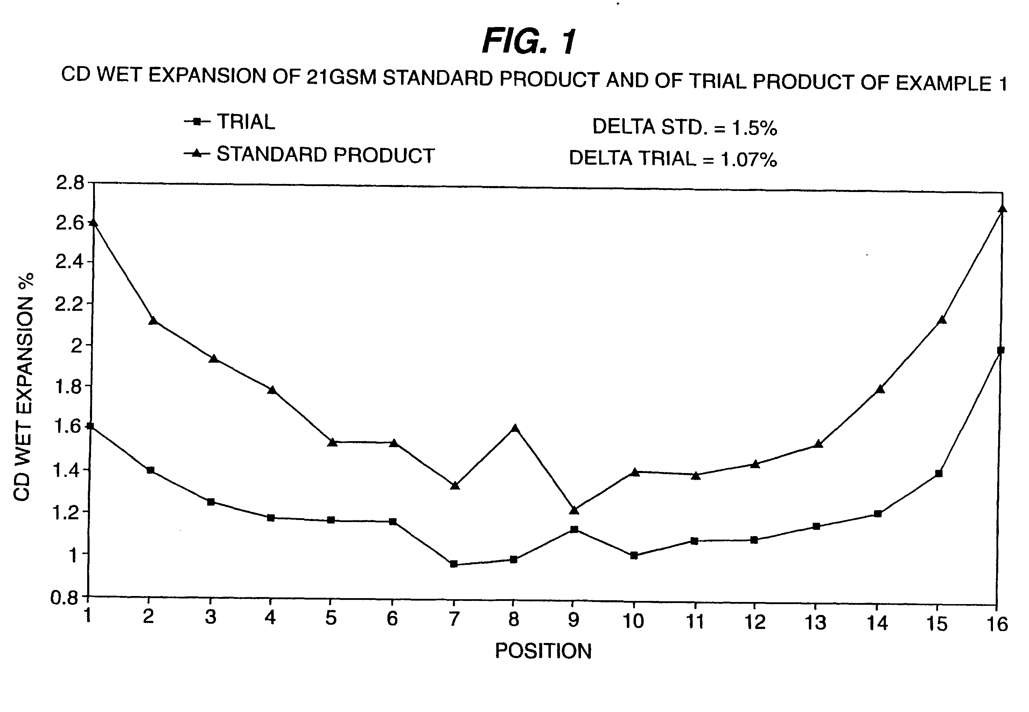

Figure 1 shows the 16 position profiles of CD wet expansion for the standard material and the material of Test 1.

### Example 2: target grammage 19 g/m²

| Property | 100% abaca | 94% abaca, 6% polyester |
|---|---|---|
| Grammage (g/m²) | 19.03 | 19.1 |
| MD tensile strength (N/m) | 1667 | 1474 |
| CD tensile strength (N/m) | 1006 | 898 |
| Wet burst (Kpa) | 48 | 34 |
| CD wet expansion, centre (%) | 1.58 | 1.19 |
| CD wet expansion, edge (%) | 2.7 | 1.8 |
| CD wet expansion range, 16 positions (%) | 1.28 | 0.82 |

### Example 3: target grammage 17 g/m²

| Property | 100% abaca | 94% abaca, 6% polyester |
|---|---|---|
| Grammage (g/m²) | 17.05 | 17.31 |
| MD tensile strength (N/m) | 1338 | 1248 |
| CD tensile strength (N/m) | 908 | 765 |
| Wet burst (Kpa) | 38 | 34 |
| CD wet expansion, centre (%) | 1.4 | 1.02 |
| CD wet expansion, edge (%) | 2.54 | 1.55 |
| CD wet expansion range, 16 positions (%) | 1.55 | 0.84 |

All the examples show that material produced by the method of the invention has a reduced absolute CD wet expansion but the difference between the highest and lowest values by both methods of measurement is significantly reduced. Though there has been a reduction in the absolute value of wet expansion in these examples, it is still possible to control this by control of the degree of stretch applied to the paper during drying. Though these levels of stretch (often termed "draw") cannot be quantified, a comparison of Tests 1 and 2 of Example 1 illustrates that wet expansion level can be controlled. The material of the invention also has a reduced tensile strength but the wet bursting strength does not show a significant change.

### Example 4: target grammage 21g/m²

In this example casing paper has been produced using the resin impregnation process of US-A-5,300,319. Two drying stages were employed: after wet-laying and after the impregnation with resin.

| Property | 100% abaca | 94% abaca, 6% polyester |
|---|---|---|
| MD tensile strength (N/m) | 1835 | 1699 |
| CD wet expansion, mean (%) | 1.5 | 0.96 |
| CD wet expansion range, 16 positions (%) | 1.36 | 1 |

### Example 5:

Casing paper manufactured according to Example 2 was formed into casing tubes with a nominal diameter of 70 mm. The diameter of the tubes was then measured when the internal pressure was 21 kPa. For casing paper taken from the centre of the machine which has a CD wet expansion of 0.9%, the diameter under pressure was 76.5 mm; for paper taken from the edge of the machine which had a CD wet expansion of 1.3%, the diameter under pressure was 77.2 mm. (The CD wet expansion values in this Example were measured by a slightly different method to that used in Example 2: this, coupled with sampling differences, may explain the differences between the values quoted in this Example and those quoted in Example 2.) For a 70 mm nominal diameter casing tube the diameter tolerance under pressure is 74.6 mm to 77.6 mm so that paper from any part of the paper machine could have been used to produce this size of casing. If paper made by the prior art method had been used then paper from the edge of the machine would have been outside the tolerance. It should be noted that paper made according to the prior art with a CD wet expansion as low as 0.9% would produce casings with a diameter under pressure below the lower tolerance limit; the paper of the invention is not as "stiff" as the prior art material. It will, of course, be understood that the present invention has been described above purely by way of example and that modifications of detail can be made within the scope of the invention.

## Claims

1. The use, in a web material comprising cellulosic fibres, of synthetic fibres for reducing variations in wet expansion in the cross direction of the web material.

2. The use according to claim 1, in which the synthetic fibres are selected from polyamide, polyester and polyolefin fibres.

3. The use according to claim 1 or 2, in which the cellulosic web includes abaca and/or other vegetable fibres.

4. The use according to claim 1, 2 or 3, in which the cellulosic web includes woodpulp fibres in an amount of up to 50% by weight of the total of cellulosic and synthetic fibres.

5. The use according to any of claims 1 to 4, in which the content of synthetic fibres in the web material is from 0.5 to 20% by weight of the total of cellulosic and synthetic fibres.

6. The use according to claim 5, in which the said content of synthetic fibres is from 3 to 9% by weight.

7. The use, according to any of claims 1 to 6, in which the web material is wet-laid from a fibrous mixture containing cellulosic fibres and the synthetic fibres.

8. The use, according to any of claims 1 to 7, in which the web material is casing paper and is bonded with regenerated cellulose or with a resin binder or mixture of resin binders.

9. The use, according to claim 8, in which the bonded casing paper is impregnated with viscose from which cellulose is thereafter regenerated to form a casing material for the packaging of sausage or other meat product or other food products.

10. The use according to any of claims 1 to 9, in which drying of the said web material and/or of the bonded casing paper is effected by means of a plurality of heated cylinders.

11. A casing paper, suitable for the preparation of casing material for the packaging of sausage or other meat product or other food products, which casing paper contains a web material comprising cellulosic fibres and synthetic fibres, the web material being bonded with regenerated cellulose or with a binder resin or mixture of resin binders, wherein the synthetic fibres are selected from (i) fibres made of an organic polymer selected from polyesters, polyamides, polyolefins and copolymers thereof, (ii) fibres made of a mixture of such organic polymers and (iii) mixtures of fibres (i) and/or (ii).

12. A casing paper according to claim 11, in which the synthetic fibres are selected from polyamide, polyester and polyolefin fibres.

13. A casing paper according to claim 11 or 12, in which the cellulosic web includes abaca and/or other vegetable fibres.

14. A casing paper according to claim 11, 12 or 13, in which the cellulosic web includes woodpulp fibres in an amount of up to 50% by weight of the total of cellulosic and synthetic fibres.

15. A casing paper according to any of claims 11 to 14, in which the content of synthetic fibres in the web material is from 0.5 to 20% by weight of the total of cellulosic and synthetic fibres.

16. A casing paper according to claim 15, in which the said content of synthetic fibres is from 3 to 9% by weight.

17. A process for preparing casing paper which comprises forming a web material containing cellulose fibres and synthetic fibres, and impregnating the web material with a resin binder, or mixture of resin binders, or with viscose, wherein the synthetic fibres are selected from (i) fibres made of an organic polymer selected from polyesters, polyamides, polyolefins and copolymers thereof, (ii) fibres made of a mixture of such organic polymers and (iii) mixtures of fibres (i) and/or (ii).

18. A process according to claim 17, in which the web material is formed by a wet-laying method.

19. A process according to claim 17 or 18, which is directed to the preparation of a casing paper according to any of claims 12 to 16.

20. A process according to claim 17, 18 or 19, in which drying of the web material and/or of the casing paper is effected by means of a plurality of heated cylinders.

21. A casing material for the packaging of sausage or other meat product or other food products, which comprises material, e.g. in the form of a sheet or tube, comprising regenerated cellulose in which there is embedded a casing paper according to any of claims 11 to 16 or a casing paper prepared by a process according to any of claims 17 to 20.

## Patentansprüche

1. Verwendung von synthetischen Fasern in einem Bahnenmaterial, umfassend Cellulosefasern, zur Reduzierung von Veränderungen in der Naßausdehnung in der Querrichtung des Bahnenmaterials.

2. Verwendung nach Anspruch 1, wobei die synthetischen Fasern aus Polyamid, Polyester und Polyolefinfasern ausgewählt sind.

3. Verwendung nach Anspruch 1 oder 2, wobei die Cellulosebahn Abaca und/oder andere pflanzliche Fasern einschließt.

4. Verwendung nach Anspruch 1, 2 oder 3, wobei die Cellulosebahn Zellstofffasem in einer Menge von bis zu 50 Gew.-%, bezogen auf die Gesamtheit der Cellulose- und synthetischen Fasern, einschließt.

5. Verwendung nach einem der Ansprüche 1 bis 4, wobei der Gehalt der synthetischen Fasern in dem Bahnenmaterial von 0,5 bis 20 Gew.-%, bezogen auf die Gesamtheit der Cellulose- und synthetischen Fasern, beträgt.

6. Verwendung nach Anspruch 5, wobei der Gehalt der synthetischen Fasern von 3 bis 9 Gew.-% beträgt.

7. Verwendung nach einem der Ansprüche 1 bis 6, wobei das Bahnenmaterial aus einem faserhaltigen Gemisch, enthaltend Cellulosefasern und die synthetischen Fasern, naßgelegt ist.

8. Verwendung nach einem der Ansprüche 1 bis 7, wobei das Bahnenmaterial Verpackungspapier ist und mit regenerierter Cellulose oder mit einem Bindemittelharz oder Gemisch von Bindemittelharzen gebunden ist.

9. Verwendung nach Anspruch 8, wobei das gebundene Verpackungspapier mit Viskose, aus welcher Cellulose danach regeneriert wird, imprägniert ist, um ein Verpackungsmaterial für die Verpackung von Wurst oder anderen Fleischprodukten oder anderen Lebensmittelprodukten zu bilden.

10. Verwendung nach einem der Ansprüche 1 bis 9, wobei das Trocknen des Bahnenmaterials und/oder des gebundenen Verpackungspapiers mittels einer Vielzahl von erwärmten Zylindern bewirkt wird.

11. Verpackungspapier, geeignet zur Herstellung von Verpackungsmaterial für die Verpackung von Wurst oder anderen Fleischprodukten oder anderen Lebensmittelprodukten, wobei das Verpackungspapier ein Bahnenmaterial enthält, umfassend Cellulosefasern und synthetische Fasern, wobei das Bahnenmaterial mit regenerierter Cellulose oder mit einem Bindemittelharz oder Gemisch von Bindemittelharzen gebunden ist, wobei die synthetischen Fasern aus (i) Fasern, hergestellt aus einem organischen Polymer, ausgewählt aus Polyestern, Polyamiden, Polyolefinen und Copolymeren davon, (ii) Fasern, hergestellt aus einem Gemisch von solchen organischen Polymeren, und (iii) Gemischen von Fasern (i) und/oder (ii) ausgewählt ist.

12. Verpackungspapier gemäß Anspruch 11, wobei die synthetischen Fasern aus Polyamid, Polyester und Polyolefinharzen ausgewählt sind.

13. Verpackungspapier gemäß Anspruch 11 oder 12, wobei die Cellulosebahn Abaca und/oder andere pflanzliche Fasern einschließt.

14. Verpackungspapier gemäß anspruch 11, 12 oder 13, wobei die Cellulosebahn Zellstofffasern in einer Menge von bis zu 50 Gew.-%, bezogen auf die Gesamtheit der Cellulose- und synthetischen Fasern, einschließt.

15. Verpackungspapier gemäß einem der Ansprüche 11 bis 14, wobei der Gehalt der synthetischen Fasern in dem Bahnenmaterial von 0,5 bis 20 Gew.-%, bezogen auf die Gesamtheit der Cellulose- und synthetischen Fasern, beträgt.

16. Verpackungspapier gemäß Anspruch 15, wobei der Gehalt der synthetischen Fasern 3 bis 9 Gew.-% beträgt.

17. Verfahren zur Herstellung von Verpackungspapier, welches das Bilden eines Bahnenmaterials, enthaltend Cellulosefasern und synthetische Fasern, und das Imprägnieren des Bahnenmaterials mit einem Bindemittelharz oder Gemisch von Bindemittelharzen oder mit Viskose umfaßt, wobei die synthetischen Fasern aus (i) Fasern, hergestellt aus einem organischen Polymer, ausgewählt aus Polyestern, Polyamiden, Polyolefinen und Copolymeren davon, (ii) Fasern aus einem Gemisch von solchen organischen Polymeren und (iii) Gemischen von Fasern (i) und/oder (ii), ausgewählt sind.

18. Verfahren nach Anspruch 17, worin das Bahnenmaterial durch ein Naßlegeverfahren gebildet wird.

19. Verfahren nach Anspruch 17 oder 18, welches auf die Herstellung eines Verpackungspapiers gemäß einem der Ansprüche 12 bis 16 gerichtet ist.

20. Verfahren nach Anspruch 17, 18 oder 19, worin das Trocknen des Bahnenmaterials und/oder des Verpackungspapiers mittels einer Vielzahl von erwärmten Zylindern bewirkt wird.

21. Verpackungsmaterial zur Verpackung von Wurst oder anderen Fleischprodukten oder anderen Lebensmittelprodukten, welches Material, z.B. in der Form einer Lage oder einer Röhre, umfassend regenerierte Cellulose, worin ein Verpackungspapier gemäß einem der Ansprüche 11 bis 16 oder ein Verpackungspapier, hergestellt durch ein Verfahren gemäß einem der Ansprüche 17 bis 20, eingebettet ist, umfaßt.

## Revendications

1. Utilisation, dans une matière de toile comprenant des fibres cellulosiques, de fibres synthétiques permettant de réduire les variations de dilatation en milieu humide dans la direction transversale de la matière de toile.

2. Utilisation selon la revendication 1, dans laquelle les fibres synthétiques sont choisies parmi les fibres de polyamide, de polyester et de polyoléfine.

3. Utilisation selon la revendication 1 ou 2, dans laquelle la toile cellulosique comprend des fibres d'abaca et/ou autres végétales.

4. Utilisation selon la revendication 1, 2 ou 3, dans laquelle la toile cellulosique comprend des fibres de pâte de bois en une quantité allant jusqu'à 50% en poids du poids total des fibres cellulosiques et synthétiques.

5. Utilisation selon l'une quelconque des revendications 1 à 4, dans laquelle la teneur en fibres synthétiques de la matière de toile est de 0,5% à 20% en poids du poids total des fibres cellulosiques et synthétiques.

6. Utilisation selon la revendication 5, dans laquelle ladite teneur en fibres synthétiques est de 3% à 9% en poids.

7. Utilisation, selon l'une quelconque des revendications 1 à 6, dans laquelle la matière de toile est non tissée par voie humide à partir d'un mélange fibreux contenant des fibres cellulosiques et les fibres synthétiques.

8. Utilisation, selon l'une quelconque des revendications 1 à 7, dans laquelle la matière de toile est un papier d'emballage et est liée avec de la cellulose régénérée, un liant résineux ou un mélange de liants résineux.

9. Utilisation, selon la revendication 8, dans laquelle le papier d'emballage est imprégné de viscose à partir de laquelle la cellulose est ultérieurement régénérée pour former une matière d'emballage pour l'emballage de saucisses ou d'autres produits à base de viande ou d'autres produits alimentaires.

10. Utilisation, selon l'une quelconque des revendications 1 à 9, dans laquelle le séchage de ladite matière de toile et/ou du papier d'emballage lié est réalisé au moyen d'une pluralité de cylindres chauffés.

11. Papier d'emballage, approprié pour la préparation de matière d'emballage pour l'emballage de saucisses ou d'autres produits à base de viande ou d'autres produits alimentaires, papier d'emballage qui contient une matière de toile comprenant des fibres cellulosiques et des fibres synthétiques, la matière de toile étant liée avec de la cellulose régénérée ou un liant résineux ou un mélange de liants résineux, dans lequel les fibres synthétiques sont choisies parmi (i) les fibres composées d'un polymère organique choisi parmi les polyesters, les polyamides, les polyoléfines et leurs copolymères, (ii) les fibres composées d'un mélange de ces polymères organiques et (iii) les mélanges de fibres (i) et/ou (ii).

12. Papier d'emballage selon la revendication 11, dans lequel les fibres synthétiques sont choisies parmi les fibres de polyamide, de polyester et de polyoléfine.

13. Papier d'emballage selon la revendication 11 ou 12, dans lequel la toile cellulosique comprend des fibres d'abaca et/ou autres végétales.

14. Papier d'emballage selon la revendication 11, 12 ou 13, dans lequel la toile cellulosique comprend des fibres de pâte de bois en une quantité allant jusqu'à 50% en poids du poids total des fibres synthétiques et cellulosiques.

15. Papier d'emballage selon l'une quelconque des revendications 11 à 14, dans lequel la teneur en fibres synthétiques de la matière de toile est de 0,5% à 20% en poids du poids total des fibres cellulosiques et synthétiques.

16. Papier d'emballage selon la revendication 15, dans lequel ladite teneur en fibres synthétiques est de 3% à 9% en poids.

17. Procédé de préparation de papier d'emballage qui consiste à former une matière de toile contenant des fibres cellulosiques et des fibres synthétiques et imprégner la matière de toile d'un liant résineux ou d'un mélange de liants résineux, ou de viscose, dans lequel les fibres synthétiques sont choisies parmi (i) les fibres composées d'un polymère organique choisi parmi les polyesters, les polyamides, les polyoléfines et leurs copolymères, (ii) les fibres composées d'un mélange de ces polymères organiques et (iii) les mélanges de fibres (i) et/ou (ii).

18. Procédé selon la revendication 17, dans lequel la matière de toile est formée au moyen d'un procédé de non-tissage par voie humide.

19. Procédé selon la revendication 17 ou 18, qui est destiné à la préparation d'un papier d'emballage selon l'une quelconque des revendications 12 à 16.

20. Procédé selon la revendication 17, 18 ou 19, dans lequel le séchage de la matière de toile et/ou du papier d'emballage est réalisé au moyen d'une pluralité de cylindres chauffés.

21. Matière d'emballage pour l'emballage de saucisses ou d'autres produits à base de viande ou d'autres produits alimentaires, qui comprend une matière, par exemple sous la forme d'une feuille ou d'un tube, comprenant de la cellulose régénérée dans laquelle est incorporé un papier d'emballage selon l'une quelconque des revendications 11 à 16 ou un papier d'emballage préparé au moyen d'un procédé selon l'une quelconque des revendications 17 à 20.
